# EUROPEAN PATENT SPECIFICATION

(11) **EP 2 628 979 B1**
(45) Date of publication and mention of the grant of the patent: **08.04.2015**
(21) Application number: 12155962.9
(22) Date of filing: 17.02.2012
(51) Int. Cl.: F16H 59/04

(54) **A method for controlling a motor vehicle and a gearshift assembly capable of operating according to such a method**
Verfahren zur Steuerung eines Kraftfahrzeugs und Schaltanordnung für einen Betrieb gemäß solch eines Verfahrens
Procédé de contrôle d'un véhicule à moteur et ensemble de changement de vitesses capable de fonctionner selon un tel procédé

(43) Date of publication of application: 21.08.2013
(73) Proprietor: Fico Triad, S.A., 08232 Viladecavalls (ES)
(72) Inventor: Dominguis Botella, Marc, 08790 Gelida (Barcelona) (ES); Moreno Colom, Javier, 08519 Malla (Barcelona) (ES)
(74) Representative: ZBM Patents - Zea, Barlocci & Markvardsen

(56) References cited:
- EP-A1- 2 184 517
- DE-A1-102004 005 791
- GB-A- 2 294 302
- US-A1- 2008 082 245
- US-A1- 2009 199 670

## Description

A method is disclosed for controlling a motor vehicle as defined in claim 1. A gearshift assembly for motor vehicles is also described as defined in claim 2.

### BACKGROUND ART

Motor vehicle transmissions are currently controlled by the user either through mechanical or electronic devices comprising a selector lever pivotally mounted to a shifter base. The selector lever can be pivoted relative to the shifter base, which pivotal movement upon actuation of the user for gearshifting may result in transmission of command signals to the vehicle transmission. This is carried out by lever position sensors for detecting the different positions of the lever relative to the shifter base.

Examples of such shifting devices for powerless or non-mechanical transmission in motor vehicles are disclosed in documents US2004194567 or US2009199670. These shifting devices generally comprise a gearshift lever that is pivotally mounted along a shifter base. The gearshift lever can be moved by the user between a neutral position to at least one shift position. One or several detection means are provided for detecting the shift positions of the gearshift lever. The detection means may comprise, for example, Hall sensors, optical sensors or electric switches.

The problem derived from such shifting devices is that sensor arrangements may become sometimes undesirably capital intensive. Especially when using magnetic field sensors, the overall cost is high since magnet sensors are increasingly expensive. Current increase of taxes on rare earth minerals such as neodymium renders alternative solutions in this field.

GB2294302 suggests a gear ratio shift control by measuring vehicle acceleration and time elapsed during a gearshift. Gearshift quality from these measurements is assessed, and subsequent shifts are controlled accordingly. Control means are provided to determine the need to shift from one gear ratio to another gear ratio and to provide a signal to the gearshift means when such a determination is made in order to effect a gearshift. The control means are coupled to timing means and to an accelerometer to determine the quality of the gearshift on the basis of the acceleration signal and time elapsed during a gearshift and to control subsequent operation of the gearshift means on the basis of the determined gearshift quality. This solution however is addressed for determining the need to shift and the accelerometer signal is used for providing an indication of gearshift quality.

In document US2008082245 overall vehicle operation is regulated based on the acceleration of a vehicle transmission output shaft and the acceleration of the vehicle. The longitudinal acceleration of the vehicle resulting from a gearshift is monitored and calibration parameters are set to minimize the magnitude of the longitudinal acceleration to provide a smooth shift feel.

DE 102004005791 A discloses a method for operating a motor vehicle in which a change in position of an actuating element is determined using at least one sensor means. Values of change in position are compared with calculated values for determining a possible shift request of the driver.

The method comprises the steps of:
- detecting the movement of a gearshift actuator, said step being carried out based on a first accelerometer fitted on a fixed part of the motor vehicle that is suitable for detecting the acceleration of the motor vehicle and a second accelerometer fitted on the gearshift actuator that is suitable for detecting the acceleration of the gearshift actuator when actuated by the user;
- assessing the behaviour of the gearshift actuator according to the detected movement of the gearshift actuator;
- determining first acceleration values from the first accelerometer;
- determining second acceleration values from the second accelerometer as the gearshift actuator is moved by the user;
- determining values corresponding to accelerations;
- comparing said values;
- determining an intended shifting operation associated with the behaviour of the gearshift actuator; and
- generating a command signal from the detected movement of the gearshift actuator based on the intended operation; said command signal being used for controlling the motor vehicle transmission.

A need still remains for methods and devices capable of controlling a vehicle transmission through a simple, safe, reliable, and economical arrangement that in turn can be installed and used in any standard gearshift assemblies in a cost-effective manner.

### SUMMARY OF THE INVENTION

A method is disclosed for controlling a motor vehicle as defined in claim 1. A gearshift assembly for motor vehicles is also described as defined in claim 2. Advantageous embodiments are defined in the dependent claims.

With the present method and assembly gearshifting operations can be detected, instead of detecting gearshifting positions as prior art methods and assemblies do. In addition, a robust and cost effective vehicle control is provided avoiding the use of magnetic gearshift detection and thus reducing costs. This is highly advantageous for vehicle transmission control.

Additional objects, advantages and features of embodiments will become apparent to those skilled in the art upon examination of the description, or may be learned by practice thereof.

### BRIEF DESCRIPTION OF THE DRAWINGS

Particular embodiments of the present method and assembly will be described in the following by way of a non-limiting example with reference to the appended drawings, in which:
Figure 1 shows one embodiment of a gearshift assembly for a motor vehicle in a neutral position; and
Figure 2 shows the assembly of the embodiment in figure 1 in a different gearshift position.

### DETAILED DESCRIPTION OF EMBODIMENTS

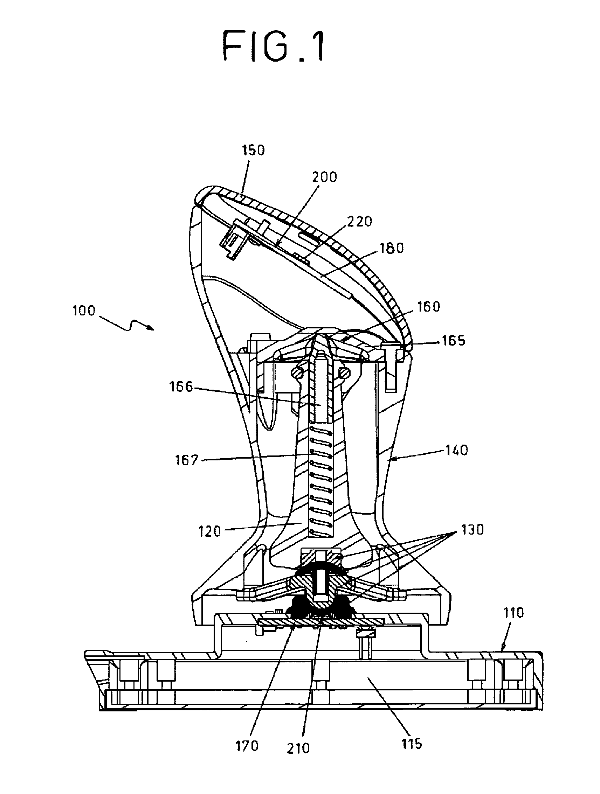

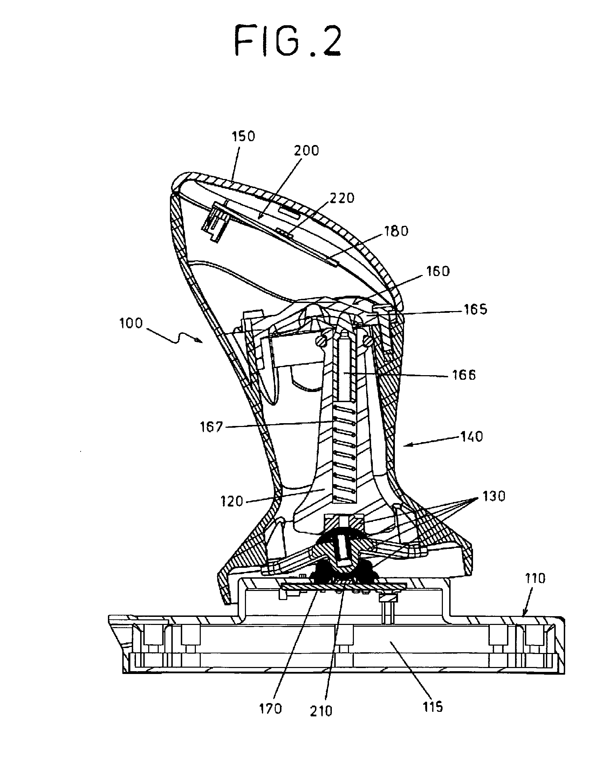

The figures 1 and 2 show one particular embodiment of a gearshift assembly of the shift by wire type for a motor vehicle. The motor vehicle shift by wire gearshift assembly in both figures correspond to two different gearshift positions. Like reference numerals indicate corresponding parts in both figures.

The gearshift assembly has been indicated as a whole by reference numeral 100. The gearshift assembly 100 shown in the figures comprises a support arrangement 110 that is associated with or fixed to a vehicle chassis or console (not shown for the sake of clarity) through a support member or socket 115.

The gearshift assembly 100 of the embodiment shown further comprises a hollow upright element 120 that is fixedly secured to the support arrangement 110.

The gearshift assembly 100 further comprises a knob 140. The knob 140 is configured as a main housing having an upper cover 150. The knob 140 is pivotally mounted to the support arrangement 110 through suitable connecting means 130. Therefore, the knob 140 is arranged such that it can be moved relative to the hollow upright element 120 for shifting operations upon actuation of the knob 140 by a user or driver from a neutral position (as shown in figure 1) to any gear change positions (as shown in figure 2).

The gearshift assembly 100 of the embodiment shown is further provided haptic means 160. The haptic means 160 are arranged inside the knob 140 and fixed thereto as depicted in the figure. The haptic means 160 comprise a contoured surface or feeling pad 165 and therefore it is also fixed within the knob 140 and movable relative to the hollow upright element 120.

The haptic means 160 further comprise a follower finger 166. The follower finger 166 is attached to the hollow upright element 120. The follower finger 166 is also spring biased within the upright element 120 by a suitable compression spring 167. The compression spring 167 is also fitted within the upright element 120, in alignment with the follower finger 166. The compression spring 167 serves the purpose of keeping the follower finger 166 biased towards the contoured surface 165 of the haptic means 160. In this way, the follower finger 166 slides onto the contoured surface 165 as the contoured surface 165 is moved upon actuation of the knob 140 by the user or driver. Actuation of the knob 140 by the user or driver causes the follower finger 166 to travel through the irregularities in the contoured surface 165. In this way, the different gearshifting positions of the knob 140 are felt by the user when in use.

The gearshift assembly 100 on the embodiment shown further comprises means 200 for detecting the movement of the gearshift actuator when gearshifting operations are performed through the knob 140 upon its movement by the user or driver. The detecting means 200 in this particular embodiment comprise inertial sensors 210, 220. The inertial sensors 210, 220 are suitable for providing relative acceleration values. The acceleration values provided by the inertial sensors 210, 220 can be compared to predetermined values of acceleration corresponding to preset intended shifting operations. A control unit may be provided adapted for comparing such relative values to predetermined values of acceleration corresponding to pre-set gearshifting operations. Although two inertial sensors 210, 220 are provided, the detecting means 200 could comprise only one inertial sensor which acceleration data would be compared to a predetermined value of acceleration corresponding to a particular pre-set intended shifting operation.

The inertial sensors in the example shown comprise first and second accelerometers 210, 220. The first accelerometer 210 is fitted on a fixed part of the motor vehicle and the second accelerometer 22o is fitted on the gearshift actuator 140. More specifically, the first accelerometer 210 is attached to a static circuit board 170. The circuit board 170 is fitted in the support arrangement 110 of the gearshift assembly 100. This first accelerometer 210 is suitable for detecting, and in some embodiments measuring, the acceleration of the motor vehicle. The second accelerometer 220 is attached to a dynamic circuit board 180. The circuit board 180 is fitted inside the knob 140, for example in an upper portion therein, under the knob upper cover 150. This second accelerometer 220 is suitable for detecting, and in some embodiments measuring, the acceleration of the upright element 120 when actuated by the user or driver.

The gearshift assembly 100 in the embodiment shown further comprises means for assessing the behaviour of the gearshift actuator 140 according to the detected movement of the actuator 140, means for determining an intended shifting operation associated with the behaviour of the gearshift actuator 140 and means for generating a command signal from the detected movement of the gearshift actuator 140 based on the intended shifting operation. The command signal generated from the detected movement of the gearshift actuator 140 is used for controlling the motor vehicle transmission, e.g. through the vehicle gearbox.

The present assembly 100 further comprises a control circuit and a processor installed in the control circuit for executing a program code to command the control circuit. The assembly 100 further comprises a memory installed in the control circuit and coupled to the processor. The processor is configured to execute a program code. The program code is stored in the memory. The program code is capable of receiving data about the movement of the actuator 140 based on at least one of the above mentioned inertial sensors 210, 220. The program code can assess the behaviour of said actuator 140 according to its detected movement and then determining an intended gearshift operation associated with the behaviour of the actuator 140. The program code is also capable of generating a command signal from the detected movement of the actuator 140 based on said intended operation. This command signal is used for controlling the motor vehicle, and more specifically for controlling the vehicle transmission by performing suitable gearshifting operations corresponding to the movements performed by the knob 140 when actuated by the user or driver, as stated above.

Although only a number of particular embodiments and examples of the present method and assembly have been disclosed herein, it will be understood by those skilled in the art that other alternative embodiments and/or uses and obvious modifications and equivalents thereof are possible.

For example, a different number of accelerometers such as more than two may be also used.

Any suitable accelerometer known in the art suitable for measuring acceleration of a moving body could be used. The locations where the accelerometers may be provided could be different as described as long as one of them is moved together with the movable actuator in the gearshift assembly and the other is fixed relative to the motor vehicle.

Reference signs related to the drawing and placed in parentheses in a claim are solely for attempting to increase the intelligibility of the claim, and shall not be construed as limiting the scope thereof. Thus, the scope of the present invention should not be limited by particular embodiments, but should be determined only by a fair reading of the claims that follow.

## Claims

1. A method for controlling a motor vehicle, the method comprising the steps of:
- detecting the movement of a gearshift actuator (140) that includes haptic means (160) arranged such that different gearshifting positions of the gearshift actuator (140) are felt by the user when operated, said step of detecting the movement of gearshift actuator being carried out based on a first accelerometer (210) fitted on a fixed part of the motor vehicle that is suitable for detecting the acceleration of the motor vehicle and a second accelerometer (220) fitted on the gearshift actuator (140) that is suitable for detecting the acceleration of the gearshift actuator (140) when actuated by the user;
- assessing the behaviour of the gearshift actuator (140) according to the detected movement of the gearshift actuator (140);
- determining first acceleration values from the first accelerometer (210);
- determining second acceleration values from the second accelerometer (220) as the gearshift actuator (140) is moved by the user according to said shifting positions felt by the user through the haptic means (160);
- determining relative values corresponding to accelerations, said relative values being determined through comparison therebetween;
- comparing said relative values to predetermined values of acceleration corresponding to pre-set intended operations;
- determining an intended shifting operation associated with the behaviour of the gearshift actuator (140); and
- generating a command signal from the detected movement of the gearshift actuator (140) based on the intended operation; said command signal being used for controlling the motor vehicle transmission.

2. Gearshift assembly (100) for motor vehicles comprising a movable gearshift actuator (140) operable by a user for controlling a motor vehicle transmission, wherein it further includes:
- haptic means (160) arranged in the gearshift actuator (140) such that different shifting positions of the actuator (140) are felt by the user when the gearshift actuator (140) is operated;
- a first accelerometer (210) fitted on a fixed part of the motor vehicle that is suitable for detecting the acceleration of the motor vehicle and a second accelerometer (220) fitted on the gearshift actuator (140) that is suitable for detecting the acceleration of the gearshift actuator (140) as the gearshift actuator (140) is moved by the user according to said shifting positions felt by the user through the haptic means (160); the first and second accelerometers (210, 220) being suitable for providing relative acceleration values that can be compared to predetermined values of acceleration corresponding to pre-set intended shifting operations;
- means for assessing the behaviour of the gearshift actuator (140) according to acceleration values from the first and second accelerometers (210, 220) and predetermined values of acceleration corresponding to pre-set intended operations;
- means for determining an intended shifting operation associated with the behaviour of the gearshift actuator (140); and
- means for generating a command signal from the detected movement of the gearshift actuator (140) based on the intended shifting operation; said command signal being used for controlling the motor vehicle transmission.

3. The assembly (100) of claim 2, wherein it further includes a position sensor.

4. The assembly (100) of claim 3, wherein the position sensor is at least one sensor selected from a switch, a magnetic or resistive sensor.

5. The assembly (100) of any of the claims 2 to 4, wherein it comprises:
a control circuit;
a processor installed in the control circuit for executing a program code to command the control circuit; and
a memory installed in the control circuit and coupled to the processor;
the processor being configured to execute a program code stored in said memory for
- receiving data about the movement of the actuator (140) based on at least one inertial sensor (210, 220);
- assessing the behaviour of the actuator (140) according to the detected movement of the actuator (140);
- determining an intended operation associated with the behaviour of the actuator (140); and
- generating a command signal from the detected movement of the actuator (140) based on the gearshift intended operation; said command signal being used for controlling the motor vehicle transmission.

6. The assembly (100) of any of the claims 2-5 wherein the gearshift actuator comprises a knob (140) arranged such that it can be moved relative to an upright element (120) for shifting operations, the knob (140) being adapted for receiving therein the haptic means (160) and the second accelerometer (220).

## Patentansprüche

1. Ein Verfahren zur Steuerung eines Kraftfahrzeuges, wobei das Verfahren folgende Schritte umfasst:
- Ermittlung der Bewegung eines Schaltaktuators (140) umfassend ein haptisches Mittel (160), welches so angeordnet ist, dass verschiedene Schaltpositionen des Schaltaktuators (140) vom Benutzer wahrgenommen werden, wenn er betätigt wird, wobei der Schritt, bei dem die Bewegung des Schaltaktuators ermittelt wird, basierend auf einem ersten Beschleunigungsmesser (210) durchgeführt wird,
der auf einem starren Teil des Kraftfahrzeuges aufgesetzt ist, der zur Ermittlung der Beschleunigung des Kraftfahrzeuges geeignet ist und basierend auf einem zweiten Beschleunigungsmesser (220) durchgeführt wird, der auf dem Schaltaktuator (140) aufgesetzt ist und der zur Ermittlung der Beschleunigung des Schaltaktuators (140) geeignet ist, wenn er vom Benutzer betätigt wird;
- Beurteilung des Verhaltens des Schaltaktuators (140) gemäß der ermittelten Bewegung des Schaltaktuators (140);
- Ermittlung von ersten Beschleunigungswerten aus dem ersten Beschleunigungsmesser (210);
- Ermittlung von zweiten Beschleunigungswerten aus dem zweiten Beschleunigungsmesser (220) als der Schaltaktuator (140) durch den Benutzer entsprechend den vom Benutzter durch das haptische Mittel (160) wahrgenommenen Schaltpositionen verstellt wird;
- Ermittlung von relativen Werten entsprechend Beschleunigungen, wobei die relativen Werte durch Vergleich miteinander ermittelt werden;
- Vergleich der relativen Werte mit vorherbestimmten Beschleunigungswerten entsprechend vorherbestimmten beabsichtigten Operationen;
- Ermittlung einer mit dem Verhalten des Schaltaktuators (140) assoziierten beabsichtigten Schaltoperation; und
- Erzeugung eines Befehlsignals aus der ermittelten Bewegung des Schaltaktuators (140) basierend auf der beabsichtigten Operation; wobei das Befehlsignal zur Steuerung des Kraftfahrzeuggetriebes benutzt wird.

2. Schaltanordnung (100) für Kraftfahrzeuge umfassend einen beweglichen Schaltaktuator (140), der von einem Benutzer zur Steuerung eines Kraftfahrzeugbetriebes betätigt werden kann, wobei sie weiterhin folgendes umfasst:
- ein haptisches Mittel (160), das im Schaltaktuator (140) angeordnet ist, so dass verschiedene Schaltpositionen des Aktuators (140) vom Benutzer wahrgenommen werden, wenn der Schaltaktuator (140) betätigt wird;
- einen ersten Beschleunigungsmesser (210), der auf einem starren Teil des Kraftfahrzeuges aufgesetzt ist und der geeignet zur Ermittlung der Kraftfahrzeugbeschleunigung ist und einen zweiten Beschleunigungsmesser (220), der auf dem Schaltaktuator (140) aufgesetzt ist und der zur Ermittlung der Beschleunigung des Schaltaktuators (140) geeignet ist, als der Schaltaktuator (140) vom Benutzer entsprechend den vom Benutzer durch das haptische Mittel (160) wahrgenommenen Schaltpositionen verstellt wird; wobei der erste und der zweite Beschleunigungsmesser (210, 220) geeignet zur Bereitstellung relativer Beschleunigungswerte sind, welche mit vorherbestimmten Beschleunigungswerten entsprechend voreingestellten beabsichtigten Schaltoperationen verglichen werden können;
- Mittel zur Beurteilung des Verhaltens des Schaltaktuators (140) gemäß Beschleunigungswerten aus dem ersten und aus dem zweiten Beschleunigungsmesser (210, 220) und vorherbestimmten Beschleunigungswerten entsprechend voreingestellten beabsichtigten Operationen;
- Mittel zur Ermittlung einer beabsichtigten Schaltoperation, die mit dem Verhalten des Schaltaktuators (140) assoziiert ist; und
- Mittel zur Erzeugung eines Befehlsignals aus der ermittelten Bewegung des Schaltaktuators (140) basierend auf der beabsichtigten Schaltoperation; wobei das Befehlsignal zur Steuerung des Kraftfahrzeuggetriebes benutzt wird.

3. Die Anordnung (100) des Anspruchs 2, wobei sie weiterhin einen Positionssensor beinhaltet.

4. Die Anordnung (100) des Anspruchs 3, wobei der Positionssensor mindestens ein Sensor ist, der aus einem Schalter, einem Magnetsensor oder einem resistiven Sensor ausgewählt ist.

5. Die Anordnung (100) von einem der Ansprüche 2 - 4, wobei sie weiterhin folgendes umfasst:
einen Steuerkreis;
einen im Steuerkreis eingebauten Prozessor zur Ausführung eines Programmcodes um den Steuerkreis zu befehlen; und
einen im Steuerkreis eingebauten Speicher, der an den Prozessor gekoppelt ist;
wobei der Prozessor so konfiguriert ist, um einen im Speicher gespeicherten Programmcode auszuführen, um
- Dateien über die Bewegung des Aktuators (140) basierend auf mindestens einem inertialen Sensor (210, 220) zu empfangen;
- das Verhaltens des Schaltaktuators (140) gemäß der ermittelten Bewegung des Schaltaktuators (140) zu beurteilen;
- eine mit dem Verhalten des Aktuators (140) assoziierte beabsichtigte Operation zu ermitteln; und
- ein Befehlsignal aus der ermittelten Bewegung des Schaltaktuators (140) basierend auf der beabsichtigten Schaltoperation zu erzeugen; wobei das Befehlsignal zur Steuerung des Kraftfahrzeuggetriebes benutzt wird.

6. Die Anordnung (100) von einem der Ansprüche 2-5, wobei der Schaltaktuator einen Knopf (140) umfasst, der so angeordnet ist, dass er bezüglich eines aufrecht stehenden Elements (120) für Schaltoperationen verstellt werden kann, wobei der Knopf (140) angepasst ist, um das haptische Mittel (160) und der zweite Beschleunigungsmesser (220) darein zu empfangen.

## Revendications

1. Un procédé de contrôle d'un véhicule à moteur, comprenant le procédé les étapes de :
- détecter le mouvement d'un actionneur (140) de changement de vitesses qui inclut un moyen haptique (160) disposé de façon que des différentes positions de l'actionneur (140) de changement de vitesses sont perçues par l'utilisateur lorsqu'il est manoeuvré, étant ladite étape de détection du mouvement de l'actionneur de changement de vitesses effectuée basé sur un premier accéléromètre (210) qui est ajusté sur une partie fixe du véhicule à moteur qui est approprié pour détecter l'accélération du véhicule à moteur et un deuxième accéléromètre (220) qui est ajusté sur l'actionneur (140) de changement de vitesses qui est approprié pour détecter l'accélération de l'actionneur (140) de changement de vitesses lorsqu'il est actionné par l'utilisateur;
- évaluer le comportement de l'actionneur (140) de changement de vitesses selon le mouvement détecté de l'actionneur (140) de changement de vitesses ;
- déterminer des premières valeurs d'accélération à partir du premier accéléromètre (210) ;
- déterminer des deuxièmes valeurs d'accélération à partir du deuxième accéléromètre (220) alors que l'actionneur (140) de changement de vitesses est déplacé par l'utilisateur selon lesdites positions de changement de vitesses perçues par l'utilisateur moyennant le moyen haptique (160) ;
- déterminer des valeurs relatives correspondantes aux accélérations, étant lesdites valeurs relatives déterminées par comparaison entre elles ;
- comparer lesdites valeurs relatives avec des valeurs d'accélération prédéterminées correspondantes à des opérations prévues préréglées ;
- déterminer une opération de changement de vitesses prévue associée avec le comportement de l'actionneur (140) de changement de vitesses ; et
- générer un signal de commandement à partir du mouvement détecté de l'actionneur (140) de changement de vitesses basé sur l'opération prévue ; étant ledit signal de commandement utilisé pour contrôler la transmission du véhicule à moteur.

2. Ensemble (100) de changement de vitesses pour des véhicules à moteur comprenant un actionneur (140) de changement de vitesses amovible manoeuvrable par un utilisateur pour contrôler la transmission d'un véhicule à moteur, dans lequel il inclut en outre :
- un moyen haptique (160) disposé dans l'actionneur (140) de changement de vitesses de façon que des différentes positions de changement de vitesses de l'actionneur (140) sont perçues par l'utilisateur lorsque l'actionneur (140) de changement de vitesses est manoeuvré;
- un premier accéléromètre (210) ajusté sur une partie fixe du véhicule à moteur qui est approprié pour détecter l'accélération du véhicule à moteur et un deuxième accéléromètre (220) ajusté sur l'actionneur (140) de changement de vitesses qui est approprié pour détecter l'accélération de l'actionneur(140) de changement de vitesses alors que l'actionneur (140) de changement de vitesses est déplacé par l'utilisateur selon lesdites positionnes de changement de vitesses perçues par l'utilisateur à travers le moyen haptique (160) ; étant le premier et le deuxième accéléromètres (210, 220) appropriés pour fournir des valeurs d'accélération relatives qui peuvent être comparées avec des valeurs d'accélération prédéterminées correspondantes à des opérations prévues de changement de vitesses ;
- un moyen pour évaluer le comportement de l'actionneur (140) de changement de vitesses selon des valeurs d'accélération à partir du première et du deuxième accéléromètre (210, 220) et des valeurs prédéterminées d'accélération correspondantes a des opérations préréglées prévues ;
- un moyen pour déterminer une opération de changement de vitesses prévue associée au comportement de l'actionneur (140) de changement de vitesses ; et
- un moyen pour générer un signal de commandement à partir du mouvement détecté de l'actionneur (140) de changement de vitesses basé sur l'opération de changement de vitesses prévue ; étant ledit signal de commandement utilisé pour contrôler la transmission du véhicule à moteur.

3. L'ensemble (100) de la revendication 2, dans lequel il inclut en outre un capteur de position.

4. L'ensemble (100) de la revendication 3, dans lequel le capteur de position est au moins un capteur choisi parmi un interrupteur, un capteur magnétique ou un capteur résistif.

5. L'ensemble (100) de l'une quelconque des revendications 2 à 4, dans lequel il comprend :
un circuit de contrôle ;
un processeur installé dans le circuit de contrôle pour exécuter un code de programme pour commander le circuit de contrôle ; et
une mémoire installée dans le circuit de contrôle et couplée au processeur ;
étant le processeur configuré pour exécuter un code de programme stocké dans ladite mémoire pour
- recevoir des données sur le mouvement de l'actionneur (140) basé sur au moins un capteur inertiel (210, 220) ;
- évaluer le comportement de l'actionneur (140) selon le mouvement détecté de l'actionneur (140) ;
- déterminer une opération prévue associée au comportement de l'actionneur (140) ; et
- générer un signal de commandement à partir du mouvement détecté de l'actionneur (140) basé sur l'opération de changement de vitesses prévue ; étant ledit signal de commandement utilisé pour contrôler la transmission du véhicule à moteur.

6. L'ensemble (100) de l'une quelconque des revendications 2-5 dans lequel l'actionneur de changement de vitesses comprend un bouton (140) disposé de façon qu'il peut être déplacé par rapport à un élément droit (120) pour des opérations de changement de vitesses, étant le bouton (140) adapté pour recevoir le moyen haptique (160) et le deuxième accéléromètre (220) dans son intérieur.
